# FASCICULE DE BREVET EUROPEEN

(11) **EP 4 111 822 B1**
(45) Date de publication et mention de la délivrance du brevet: **01.04.2026**
(21) Numéro de dépôt: 21710553.5
(22) Date de dépôt: 24.02.2021
(51) Int. Cl.: H05B 6/10

(54) **DISPOSITIF DE CHAUFFAGE D'UN PRODUIT PAR INDUCTION A FLUX TRANSVERSE**
VORRICHTUNG ZUM ERWÄRMEN EINES PRODUKTS DURCH QUERSTROMINDUKTION
DEVICE FOR HEATING A PRODUCT BY TRANSVERSE FLOW INDUCTION

(30) Priorité: 24.02.2020 FR 2001787
(43) Date de publication de la demande: 04.01.2023
(73) Titulaire: Fives Celes, 68610 Lautenbach (FR)
(72) Inventeur: KEZER, Tony, 68610 Lautenbach (FR); PATARD, Emmanuel, 68610 Lautenbach (FR)
(74) Mandataire: Novagraaf Group
(86) Numéro de dépôt international: PCT/FR2021/050321
(87) Numéro de publication internationale: WO 2021/170954

(56) Documents cités:
- EP-A1- 3 471 510
- EP-A2- 1 221 826
- WO-A1-02/19773
- WO-A1-2019/102511
- JP-A- 2017 004 694

## Description

### Désignation du domaine technique concerné

L'invention est relative aux dispositifs de chauffage de produits par induction à flux transverse, notamment des produits plats tels que des brames, des brames minces et des bandes.

### Problèmes techniques auxquels répond l'invention

Un dispositif de chauffage d'un produit par induction à flux transverse comprend principalement une source de puissance, un inducteur et des éléments de liaison électrique entre ces équipements.

EP 3 471 510 divulgue un dispositif de chauffage d'un produit par induction à flux transverse.

Le chauffage par induction à flux transverse permet de chauffer efficacement des produits dont la perméabilité magnétique est faible. Par exemple, il permet de chauffer un acier au carbone au-delà de son point de Curie avec une forte densité de puissance, traditionnellement jusqu'à environ 2500 kW/m².

Cette densité de puissance peut néanmoins être insuffisante pour obtenir l'augmentation de température souhaitée sur une longueur limitée par des contraintes dimensionnelles ou de procédé.

En sidérurgie, la coulée continue permet l'élaboration de produits plats en continu et directement à partir de métal en fusion contenu dans une poche de coulée. Le produit obtenu peut être une brame, d'une épaisseur typiquement comprise entre 35 et 80 mm, une brame mince d'une épaisseur typiquement comprise entre 5 et 35 mm ou une bande pour des épaisseurs typiquement inférieures ou égales à 5 mm. Après le refroidissement rapide du métal dans une lingotière permettant de solidifier le métal, des moyens de chauffage à induction permettent de l'amener aux conditions appropriées pour le laminage, typiquement à une température comprise entre 1100 °C et 1250 °C, de sorte d'obtenir la section du produit et la métallurgie visées après laminage. Selon la capacité de production de la coulée continue, la puissance nécessaire pour amener le produit à la température de laminage peut être de plusieurs mégawatts. Vu le niveau de température de laminage et la puissance nécessaire, il est connu que le moyen de chauffage soit une installation à induction à flux transverse. Cependant les inducteurs à flux transverse à haut flux connus permettent des puissances limitées à environ 1,5 MW. Pour installer la puissance utile nécessaire, plusieurs inducteurs sont placés en série, les uns après les autres. La longueur totale qui en résulte est importante, par exemple de 20 m. La demande des sidérurgistes est de réduire autant que possible cette longueur. Par ailleurs, le profil de température du produit en fin de chauffage est un facteur déterminant pour la qualité du laminage. Les équipements de chauffage actuels à flux transverse permettent d'ajuster ce profil de température, notamment pour limiter la surchauffe des bords, mais uniquement dans une plage de réglage limitée ne répondant pas pleinement aux besoins des sidérurgistes.

L'invention apporte une solution à ces problèmes avec un inducteur et une installation de chauffage dont la densité de puissance injectée dans le produit est très élevée et offrant une plus grande plage de réglage du profil de température du produit permettant d'obtenir une meilleure homogénéité de température du produit.

### Résumé de l'invention

Selon un premier aspect de l'invention, il est proposé un inducteur destiné au chauffage par induction à flux transverse d'un produit plat ayant une face supérieure et une face inférieure, ledit inducteur comprenant des bobines présentant des surfaces sensiblement parallèles entre eux, et une épaisseur selon une direction perpendiculaire à ces plans, l'inducteur comprenant également un espace central entre les bobines destiné à recevoir le produit, dans lequel au moins deux bobines sont disposées d'un premier côté de l'espace central et au moins deux bobines sont disposées d'un second côté de l'espace central opposé au premier, et d'un même côté de l'espace central, la bobine la plus proche de la face du produit est distante de celle-ci d'une première distance et les autres bobines sont disposées à une distance de la face du produit au moins égale à la première distance augmentée de l'épaisseur des bobines disposées entre elles et la face du produit et les surfaces des bobines se recouvrent au moins partiellement.

La présence d'au moins deux bobines se recouvrant au moins partiellement de chaque côté du produit permet de faire varier les lignes de champ magnétique générées et ainsi, de contrôler l'élévation de température par unité de surface du produit.

L'invention trouve particulièrement un intérêt pour les inducteurs équipés de bobines à haut flux, c'est-à-dire réalisés avec des conducteurs particuliers, par exemple comportant une pluralité de brins disposés autour d'un tube formant une âme parcourue par un fluide de refroidissement, tels que décrit par FR2989817 de la demanderesse.

Selon l'invention, les bobines placées d'un même côté du produit sont au plus près les unes des autres, selon une direction perpendiculaire aux surfaces sur lesquelles s'étendent les bobines, et de préférence au contact les unes des autres, afin de limiter les échauffements parasites et la baisse de rendement de l'inducteur qui résulterait d'un espace entre les bobines.

Selon un exemple de réalisation de l'invention, la position relative des bobines, les unes par rapport aux autres, est ajustable de sorte que les axes centraux des bobines perpendiculaires aux surfaces sur lesquelles s'étendent les bobines soient tous confondus, que ces axes centraux des bobines soient tous distincts ou que certains soient confondus et d'autres soient distincts selon une direction parallèle audites surfaces.

Selon une possibilité, la position relative des bobines les unes par rapport aux autres est ajustable selon la largeur du produit et/ou selon la longueur du produit.

Selon l'invention, les bobines situées d'un même côté du produit à chauffer peuvent être décalées l'une par rapport à une autre. Ce décalage peut être uniquement selon une direction transversale au produit, uniquement selon une direction longitudinale au produit, ou à la fois selon une direction longitudinale et une direction transversale au produit.

De même, les bobines placées de part et d'autre du produit peuvent être en vis-à-vis ou elles peuvent être décalées uniquement selon une direction transversale au produit, uniquement selon une direction longitudinale au produit, ou à la fois selon une direction longitudinale et une direction transversale au produit. Le décalage peut ne concerner qu'une partie des bobines. Par exemple, avec un inducteur selon l'invention avec deux bobines de chaque côté du produit, les deux bobines les plus proches du produit peuvent être en vis-à-vis alors que les deux bobines extérieures peuvent être décalées, ou inversement. La position en vis-à-vis des bobines est celle dont le rendement est le meilleur. Un décalage des bobines peut être réalisé notamment pour influer sur le profil de température du produit, mais il aura pour effet d'abaisser le rendement de l'installation.

Selon l'invention, la position relative des bobines d'un inducteur, de part et d'autre du produit, est également ajustable de sorte de modifier la distance entre les surfaces sensiblement parallèles sur lesquelles s'étendent les bobines, c'est-à-dire de modifier l'entrefer.

Ainsi selon l'invention, il est possible de modifier la distance entre les bobines et le produit, c'est-à-dire d'augmenter ou de diminuer l'entrefer. Ainsi, il est possible d'augmenter l'entrefer si on souhaite abaisser la densité de puissance transmise au produit, par exemple pour réduire une hétérogénéité de température du produit qui résulterait d'une densité de puissance trop importante. Avantageusement, le déplacement des bobines est réalisé de sorte que le produit soit centré entre les bobines, c'est-à-dire qu'il y ait sensiblement la même distance entre le produit et la première bobine située de chaque côté du produit.

Sur une même face du produit, la seconde bobine en partant de la face du produit est positionnée à une distance du produit au moins égale à celle à laquelle est placée la première bobine augmentée de l'épaisseur de celle-ci. Selon l'invention, il est possible de modifier la distance entre les bobines situées d'un même côté du produit à chauffer. Il est ainsi possible d'éloignée la seconde bobine de la première de sorte de modifier la densité de puissance transmise au produit. Dans une configuration avec plus de deux bobines sur une face du produit, les bobines complémentaires ont également une position ajustable par rapport aux autres bobines de sorte de les éloigner ou de les rapprocher du produit.

Selon un second aspect de l'invention, il est proposé une installation de chauffage par induction à flux transverse d'un produit comprenant au moins un inducteur selon l'une des variantes de réalisation précédentes et au moins une source de puissance reliée électriquement audit inducteur.

Selon les caractéristiques de l'inducteur et de la source de puissance, la liaison électrique entre ces deux équipements peut comprendre un transformateur rehausseur ou abaisseur de courant et/ou des condensateurs.

L'installation peut comprendre un moyen apte à modifier la distance d'une bobine à la face du produit qui lui est la plus proche.

Selon une possibilité, l'installation peut comprendre un moyen apte à modifier la position relative d'une première bobine par rapport à une seconde bobine selon la largeur du produit et/ou selon la longueur du produit.

Selon une variante de réalisation de l'invention, les bobines d'un inducteur disposées d'un côté de l'espace central dudit inducteur sont alimentées par une première source de puissance de l'au moins une source de puissance et les bobines disposées de l'autre côté de l'espace central sont alimentées par une seconde source de puissance de l'au moins une source de puissance.

Selon un autre exemple de réalisation de l'invention, les deux bobines les plus proches de l'espace central sont alimentées par une première source de puissance de l'au moins une source de puissance et les deux bobines les plus éloignées de l'espace central sont alimentées par une seconde source de puissance de l'au moins une source de puissance. Dans le cas où l'inducteur comprend plus de quatre bobines, les bobines situées entre les deux bobines les plus proches de l'espace central et les deux bobines les plus éloignées de l'espace central peuvent être alimentées par l'une ou l'autre des deux sources de puissance.

Les sources de puissance peuvent être disposées d'un même côté du produit, selon une direction transversale à celui-ci, ou de chaque côté du produit, selon cette direction transversale.

Ainsi, selon un exemple de réalisation de l'invention avec deux bobines de chaque côté de l'espace central, les deux bobines les plus proches de l'espace central, constituant une première paire de bobines, peuvent être alimentées par une première source de puissance disposée d'un côté du produit et les deux bobines les plus éloignées de l'espace central, constituant une seconde paire de bobines, peuvent être alimentées par une seconde source de puissance disposée de l'autre côté du produit.

Selon une variante de réalisation de l'invention, les deux sources de puissance ont une puissance différente, le flux maximal de puissance pouvant être transmis au produit par les deux paires de bobines étant différent.

Selon une variante de réalisation de l'invention, l'installation de chauffage par induction à flux transverse comprend au moins deux inducteurs successifs selon la direction longitudinale du produit. Ainsi, le premier inducteur est par exemple destiné à assurer une première élévation de température du produit et le second inducteur est destiné à assurer une élévation complémentaire de température du produit. Les deux inducteurs peuvent avoir le même effet sur le profil de température du produit en sortie de l'inducteur ou avoir des effets différents, par exemple opposés, selon la position relative des bobines des inducteurs. Ainsi, par exemple, un premier inducteur peut avoir une position de travail des bobines conduisant à une forte élévation de température de l'un des deux bords du produit, selon une direction transversale à celui-ci, alors que le second inducteur à une position de travail des bobines opposée conduisant à une forte élévation de température de l'autre bord du produit. Il est ainsi possible d'ajuster le profil de température du produit après chaque inducteur de sorte d'obtenir le profil de température souhaité en sortie du dernier inducteur. Par exemple, avec une solution comprenant deux inducteurs successifs et un produit entrant dans le premier inducteur avec des bords plus froids que son centre, le premier inducteur peut remonter le niveau de température d'un premier bord du produit et le second inducteur peut remonter la température du second bord du produit de sorte qu'à la sortie du second inducteur le produit est atteint l'élévation de température souhaitée tout en ayant une température homogène, ou le profil de température souhaité.

Selon un troisième aspect de l'invention, il est proposé un procédé de chauffage par induction à flux transverse d'un produit au moyen d'une installation selon l'un des exemples de réalisation décrits précédemment, caractérisé en ce que la position relative des bobines d'un inducteur, les unes par rapport aux autres et par rapport au produit, est ajustée selon le profil de température du produit visé en sortie de l'inducteur.

L'ajustement de la position des bobines peut être réalisé manuellement par un opérateur, celui-ci positionnant les bobines puis les bridant en position de travail. L'ajustement peut être réalisé par l'intermédiaire de moyens mécaniques, par exemple des systèmes de translation de type crémaillère ou glissière. Il peut également être réalisé par des moyens électriques, pneumatiques ou hydrauliques, par exemple au moyen de vérins. L'ajustement peut être automatique, en motorisant les déplacements.

L'ajustement de la position des bobines peut être réalisé par une action d'un opérateur ou automatiquement selon les caractéristiques du produit, notamment sa largeur, et/ou le profil de température souhaité du produit en sortie de l'inducteur.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig. 1] est une vue schématique en coupe longitudinale d'un inducteur, selon un exemple de réalisation de l'invention, dans une première position de travail.
[Fig. 2] est une vue schématique en coupe transversale de l'inducteur représenté en figure 1, dans la même position de travail qu'en figure 1.
[Fig. 3] est une vue schématique en vue de dessus de l'inducteur représenté aux figures précédentes, dans la même position de travail qu'en figures 1 et 2.
[Fig. 4] est une vue schématique en vue de dessus de l'inducteur représenté aux figures précédentes, dans une seconde position de travail.
[Fig. 5] est une vue schématique en coupe transversale de l'inducteur représenté aux figures précédentes, dans la même position de travail qu'en figure 4.
[Fig. 6] est une vue schématique en vue de dessus de l'inducteur représenté aux figures précédentes, dans une troisième position de travail.
[Fig. 7] est une vue schématique en coupe longitudinale de l'inducteur représenté aux figures précédentes, dans la même position de travail qu'en figure 6.
[Fig. 8] est une vue schématique en coupe longitudinale de l'inducteur représenté aux figures précédentes, dans une quatrième position de travail.
[Fig. 9] est une vue schématique en coupe longitudinale d'un inducteur selon l'invention selon deux exemples de réalisation d'une culasse, la partie supérieure de la figure illustrant un premier exemple et la partie inférieure de la figure un second exemple.
[Fig. 10] est un schéma type de montage électrique illustrant un premier exemple de raccordement des bobines d'un inducteur selon l'invention.
[Fig. 11] est un schéma type de montage électrique illustrant un second exemple de raccordement des bobines d'un inducteur selon l'invention.
[Fig. 12] est un schéma type de montage électrique illustrant un troisième exemple de raccordement des bobines d'un inducteur selon l'invention.
[Fig. 13] est un schéma type de montage électrique illustrant un quatrième exemple de raccordement des bobines d'un inducteur selon l'invention.
[Fig. 14] est un diagramme illustrant un exemple de mise en œuvre du procédé selon l'invention avec l'évolution du profil transversal de température d'un produit en sortie de quatre inducteurs successifs selon l'invention.

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Dans la suite de la description, des éléments présentant une structure identique ou des fonctions analogues seront désignés par des mêmes références.

### Description détaillée de l'invention

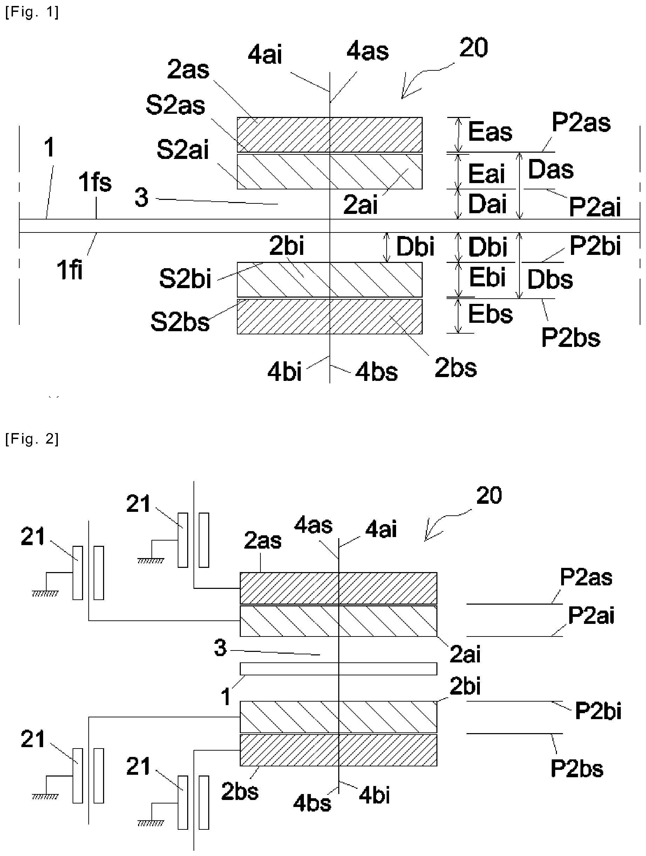

Les figures 1 à 8 illustrent schématiquement un même exemple de réalisation d'un inducteur 20 selon l'invention dans des positions de travail pouvant être différentes. L'inducteur permet le chauffage d'un produit plat 1. Ce produit définit une direction longitudinale dans le sens de la longueur du produit et une direction transversale dans le sens de la largeur du produit.

Un inducteur à flux transverse comprend typiquement des bobines qui génèrent un champ électromagnétique à l'origine de l'échauffement du produit et des culasses destinées à canaliser ce champ magnétique pour améliorer le rendement de l'inducteur. De chaque côté du produit à chauffer, la bobine et les culasses sont fixées sur un plateau. L'inducteur comprend typiquement une protection thermique constituant une barrière au rayonnement provenant du produit. Cette protection thermique peut également être étanche au gaz lorsqu'il est nécessaire de placer le produit dans une atmosphère autre que de l'air, par exemple dans une atmosphère non oxydante pour le produit. En variante, l'étanchéité au gaz peut être réalisée distinctement de la protection thermique. Pour simplifier la représentation de l'invention, seules les bobines sont représentées sur les figures.

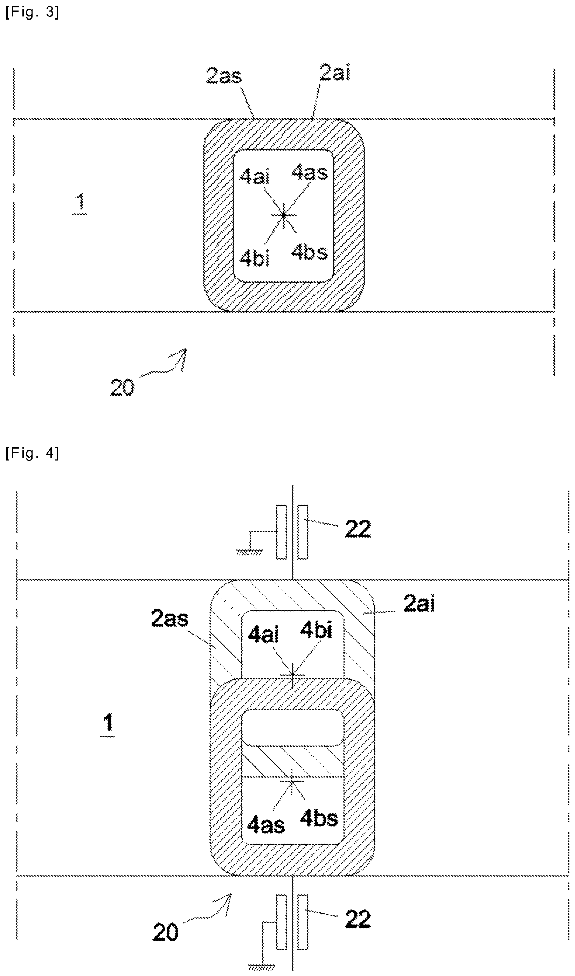

Les figures 1 à 3 illustrent schématiquement l'inducteur 20 dans un premier exemple de position de travail. La figure 1 est une vue en coupe longitudinale de l'inducteur, la figure 2 est une vue en coupe transversale de l'inducteur et la figure 3 est une vue de dessus de l'inducteur.

L'inducteur 20 comprend deux paires de bobines 2as, 2ai, 2bs, 2bi disposées de part et d'autre d'un espace central 3 dans lequel se trouve le produit 1 à chauffer. On peut voir sur ces figures 1 à 3 que, dans cet exemple de position de travail, les quatre bobines sont parfaitement superposées, leurs axes centraux 4as, 4ai, 4bs, 4bi étant confondus dans les directions longitudinale et transversale. Cette configuration est par exemple adaptée au cas où les dimensions des bobines permettent de couvrir la largeur du produit à chauffer lorsque celles-ci sont superposées.

A partir de la face 1fs supérieure du produit 1 à chauffer, la première bobine 2ai se trouve à une distance Dai, c'est-à-dire que le plan P2ai sur lequel s'étant la surface S2ai de la bobine 2ai est distant de la face 1fs supérieure du produit d'une longueur Dai. Cette distance Dai influe fortement sur la densité de puissance transmise au produit par la bobine. Pour pouvoir ajuster la puissance transmise à la bande, cette distance est réglable par le moyen 21 représenté en figure 2.

Ce moyen 21 comprend par exemple une vis sans fin dont l'axe longitudinal est perpendiculaire à la face 1fs du produit et un écrou fixé sur la bobine avec lequel coopère la vis sans fin. Ainsi, la position de la bobine est ajustée par rotation de la vis sans fin. Le moyen 21 peut également être une crémaillère, un moteur linéaire, un vérin, ou tout autre moyen connu.

La seconde bobine 2as est placée à une distance Das de la face 1fs supérieure du produit, c'est-à-dire que le plan P2as sur lequel s'étant la surface S2as de la bobine 2as est distant de la face 1fs supérieure du produit d'une longueur Das. Cette distance Das est au moins égale à la distance Dai à laquelle est positionnée la première bobine, augmentée de l'épaisseur de celle-ci. Cette distance Das influe également fortement sur la densité de puissance transmise au produit par la bobine. Pour pouvoir ajuster la puissance transmise à la bande, la distance Das est également réglable par un second moyen 21 représenté en figure 2.

A partir de la face 1fi du produit 1 à chauffer, la première bobine 2bi se trouve à une distance Dbi, c'est-à-dire que le plan P2bi sur lequel s'étant la surface S2bi de la bobine 2bi est distant de la face 1fi inférieure du produit d'une longueur Dbi. Cette distance Dbi influe fortement sur la densité de puissance transmise au produit par la bobine. Pour pouvoir ajuster la puissance transmise à la bande, cette distance est réglable par un moyen 21 représenté en figure 2.

La seconde bobine 2bs est placée à une distance Dbs de la face 1fi inférieure du produit, c'est-à-dire que le plan P2bs sur lequel s'étant la surface S2bs de la bobine 2bs est distant de la face 1fi inférieure du produit d'une longueur Dbs. Cette distance Dbs est au moins égale à la distance Dbi à laquelle est positionnée la première bobine, augmentée de l'épaisseur de celle-ci. Cette distance Dbs influe également fortement sur la densité de puissance transmise au produit par la bobine. Pour pouvoir ajuster la puissance transmise à la bande, la distance Dbs est également réglable par un second moyen 21 représenté en figure 2.

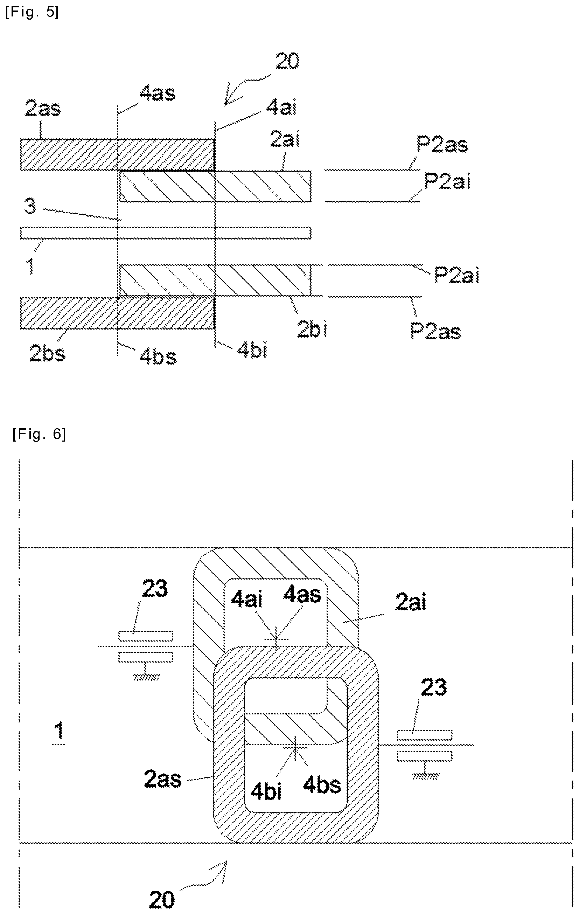

Les figures 4 et 5 illustrent l'inducteur 20 dans une seconde position de travail adaptée à une largeur de produit plus importante que dans le premier exemple de position de travail. La figure 4 est une vue de dessus de l'inducteur et la figure 5 est une vue en coupe transversale de l'inducteur. La vue en coupe longitudinale de l'inducteur serait identique à la figure 1, la position des bobines dans la direction longitudinale étant la même pour ces deux exemples de position de travail. Dans cette seconde position de travail, les bobines sont décalées transversalement pour couvrir toute la largeur du produit.

La position transversale d'une bobine est réglable par un moyen 22 représenté en figure 4. Ce moyen 22 comprend par exemple une vis sans fin dont l'axe longitudinal est parallèle à la face 1fs du produit et un écrou fixé sur la bobine avec lequel coopère la vis sans fin. Ainsi, la position de la bobine est ajustée par rotation de la vis sans fin. Le moyen 22 peut également être une crémaillère, un moteur linéaire, un vérin, ou tout autre moyen connu. Dans l'exemple de réalisation de la figure 4, les deux bobines disposées sur une même face du produit sont équipées d'un moyen 22 d'ajustement de leur position transversale. Selon un autre exemple de réalisation de l'invention, seule une bobine est équipée d'un moyen 22 d'ajustement de sa position transversale.

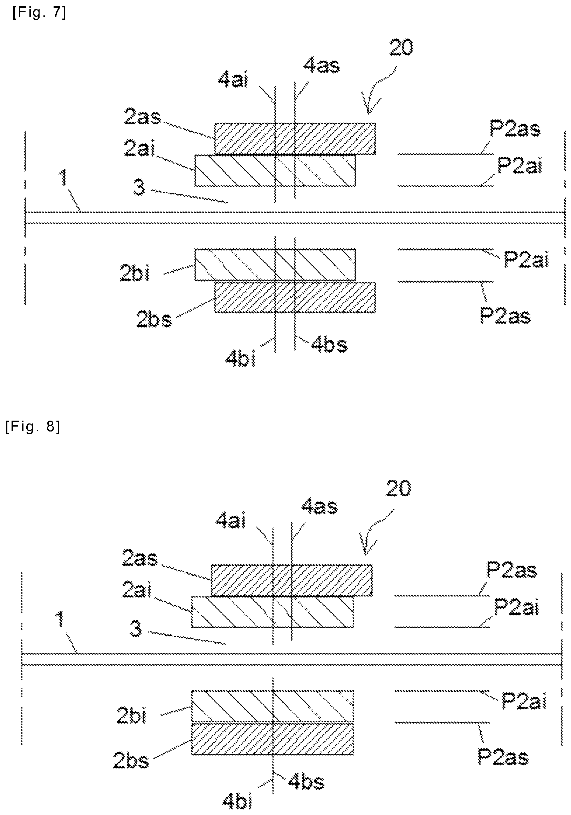

Les figures 6 et 7 illustrent l'inducteur 20 dans une troisième position de travail. La figure 6 est une vue de dessus de l'inducteur et la figure 7 est une vue en coupe longitudinale de l'inducteur. La vue en coupe transversale de l'inducteur serait identique à la figure 5, la position des bobines dans la direction transversale étant la même pour le second et le troisième exemple de position de travail.

La position longitudinale d'une bobine est réglable par un moyen 23 représenté en figure 6. Ce moyen 23 peut être similaire à celui permettant d'ajuster la position transversale d'une bobine ou il peut être différent. Dans l'exemple de réalisation de la figure 6, les deux bobines disposées sur une même face du produit sont équipées d'un moyen 23 d'ajustement de leur position longitudinale. Selon un autre exemple de réalisation de l'invention, seule une bobine est équipée d'un moyen 23 d'ajustement de sa position longitudinale.

La figure 8 représente l'inducteur 20, en vue en coupe longitudinale, dans une quatrième position de travail. Cet exemple illustre une position de travail dans laquelle nous avons une dissymétrie entre les bobines au regard du produit à chauffer. Ainsi, la bobine 2as n'est pas en vis-à-vis de la bobine 2bs. Toute autre variante de dissymétrie est possible selon l'invention.

Une bobine est avantageusement réalisée par un assemblage de conducteurs. Chaque conducteur comporte une pluralité de brins en matériau conducteur d'électricité, par exemple du cuivre, disposés autour d'un tube en matériau isolant électrique formant une âme parcourue par un fluide de refroidissement. Les brins sont imprégnés d'une pâte isolante électrique présentant un bon coefficient de conductivité thermique pour assurer un bon transfert thermique entre les brins et le tube. Une bobine est par exemple réalisée par un assemblage de conducteurs juxtaposés sur un même plan de la bobine. A chaque extrémité, les conducteurs sont reliés entre eux électriquement en un élément de raccordement à la source de puissance. De même, à chaque extrémité, les tubes en matériau isolant débouchent dans une cavité formant collecteur d'alimentation ou d'évacuation en fluide de refroidissement, selon l'extrémité.

Avantageusement, une bobine comprend deux ensembles superposés et juxtaposés tels que décrits précédemment, c'est-à-dire deux couches de conducteurs sur deux plans parallèles. En variante de réalisation, les éléments de raccordement à la source de puissance et/ou les points de raccordement au fluide de refroidissement sont communs aux deux couches de conducteurs.

Pour simplifier les figures illustrant les bobines, les raccordements électriques et hydrauliques de celles-ci n'ont pas été représentés.

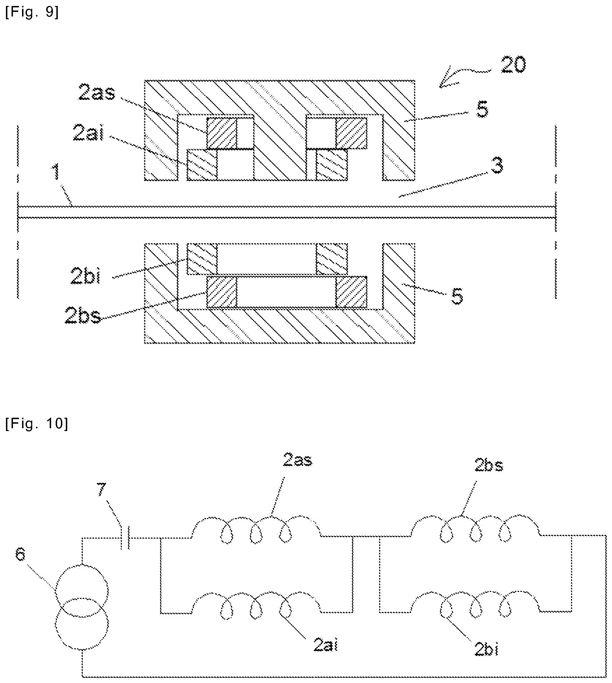

Selon une variante de réalisation de l'invention, l'inducteur comprend au moins une culasse de chaque côté du produit. Une culasse est réalisée par un empilage de tôles d'acier au silicium séparées d'un isolant électrique. Cet empilage permet à la culasse de canaliser le champ électromagnétique généré par les bobines tout en évitant la circulation de courant électrique dans la culasse. La figure 9 illustre deux exemples de réalisation d'une culasse 5 en vue en coupe longitudinale à mi-largeur d'un produit 1, sachant sur un vrai inducteur, les culasses sont identiques des deux côtés de l'inducteur. Sur la partie supérieure de la figure, la culasse à une extension centrale venant se placer à l'intérieur des bobines. Celle-ci est absente sur la variante de réalisation représentée sur la partie inférieure de la figure. L'efficacité de la culasse est meilleure si elle comprend une extension centrale, mais celle-ci limite le débattement transversal possible pour les bobines. A l'inverse, un inducteur avec des culasses sans extension centrale aura un moins bon rendement, mais il offrira une plus grande plage de réglage de la position relative des bobines.

Les figures 10 à 13 sont des schémas électriques simplifiés qui illustrent différentes variantes de raccordement d'un inducteur à deux paires de bobines selon l'invention, à titre d'exemples, sans que ceux-ci ne soient limitatifs.

La figure 10 illustre un montage série/parallèle dans lequel une source de puissance 6 alimente les 4 bobines de l'inducteur, deux bobines situées d'un même côté du produit 2as, 2ai, étant raccordées en parallèle, les deux autres bobines 2bs, 2bi, situées de l'autre côté du produit, étant également raccordée en parallèle, les deux fois deux bobines étant raccordées en série. Le circuit comprend une capacité 7 disposée en série.

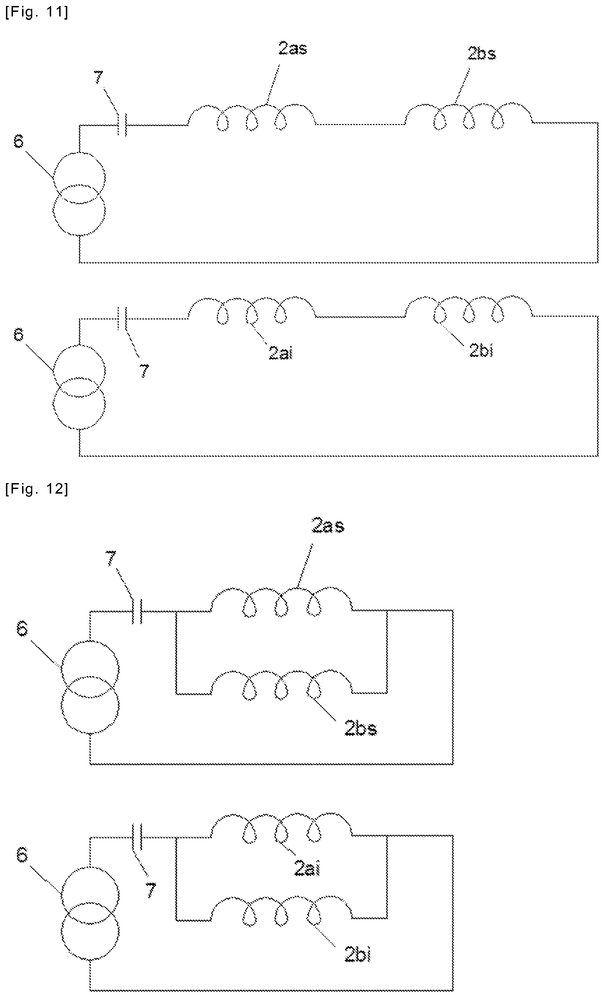

La figure 11 illustre un montage série dans lequel l'inducteur est alimenté par deux sources de puissance 6. Une source de puissance 6 alimente la paire de bobines 2as, 2bs les plus éloignées du produit, celles-ci étant raccordées en série. La seconde source de puissance 6 alimente la paire de bobines 2ai, 2bi les plus proches du produit, celles-ci étant également raccordées en série. Chaque circuit comprend une capacité 7 disposée en série.

La figure 12 illustre également une configuration avec deux sources de puissance 6, mais dont les bobines sont raccordées en parallèle. Ainsi, une source de puissance 6 alimente la paire de bobines 2as, 2bs les plus éloignées du produit, celles-ci étant raccordées en parallèle, et la seconde source de puissance 6 alimente la paire de bobines 2ai, 2bi les plus proches du produit, celles-ci étant également raccordées en parallèle. De nouveau, chaque circuit comprend une capacité 7 disposée en série.

Dans les variantes représentées en figures 11 et 12, les deux sources de puissance 6 peuvent être disposées d'un même côté latéral du produit, ou une source peut être placée de chaque côté du produit.

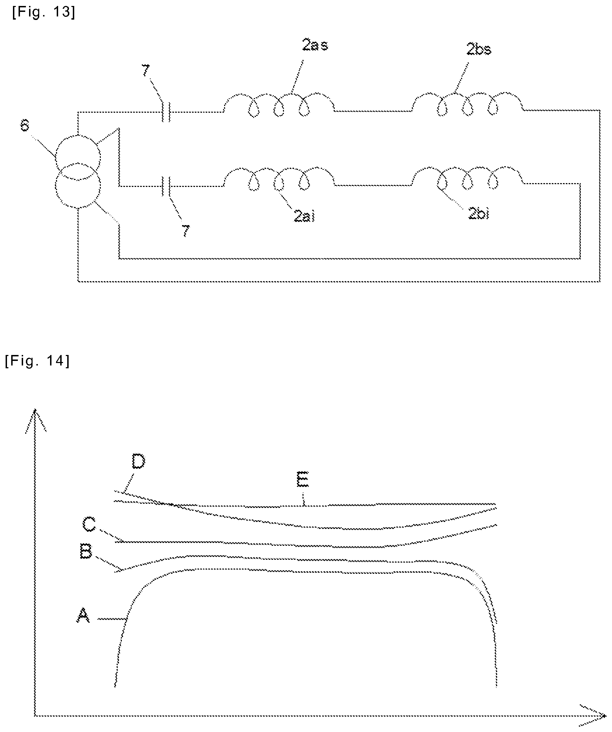

La figure 13 illustre un montage proche de celui représenté en figure 12 dans lequel l'inducteur est alimenté par une source de puissance 6 à double sortie. Une sortie de la source de puissance 6 alimente la paire de bobines 2as, 2bs les plus éloignées du produit, celles-ci étant raccordées en série. La seconde sortie de la source de puissance 6 alimente la paire de bobines 2ai, 2bi les plus proches du produit, celles-ci étant également raccordées en série. Chaque circuit comprend une capacité 7 disposée en série.

Selon un exemple d'application de l'invention au cas de la production de brames minces en acier par coulée continue, quatre installations successives permettent de réaliser une élévation de température du produit de 900 °C à 1000 °C. Chaque installation comprend une source de puissance raccordée à un inducteur ayant deux bobines disposées de chaque côté du produit. Les bobines sont raccordées électriquement selon le schéma de principes de la figure 10. Elles sont alimentées par un courant pouvant aller jusqu'à 4000 A sous une tension de 2500 V et une fréquence de 1000 Hz. La position relative des bobines des quatre installations est ajustée de sorte d'obtenir en sortie, un produit à 1000 °C dont le profil de température transversal est celui souhaité.

La figure 14 représente un diagramme d'évolution de la température transversale d'un produit qui illustre un exemple de mise en œuvre du procédé selon l'invention pour cet exemple d'application de réchauffage d'une brame mince. En ordonnée de ce diagramme se trouve la température du produit et, en abscisse, la largeur du produit. La courbe A représente le profil transversal de température du produit à l'entrée du premier inducteur, avec des bords du produit sensiblement plus froids que le centre. La courbe B représente le profil de température du produit à sortie du premier inducteur. La position relative des bobines du premier inducteur est telle qu'elle permet de favoriser un fort échauffement du bord du produit situé à gauche du diagramme. La courbe C représente le profil de température du produit à la sortie du second inducteur. La position relative des bobines du second inducteur est telle qu'elle permet de favoriser un échauffement plus important du bord du produit situé à droite du diagramme. La courbe D représente le profil de température du produit à la sortie du troisième inducteur. La position relative des bobines du troisième inducteur est telle qu'elle permet de favoriser un échauffement légèrement plus important du bord situé à gauche du diagramme. La courbe E représente le profil de température du produit à la sortie du quatrième et dernier inducteur. La position relative des bobines du dernier inducteur est telle qu'elle permet de favoriser un échauffement légèrement plus important du bord situé à droit du diagramme de sorte d'obtenir un profil homogène de température du produit.

## Revendications

1. Inducteur (20) destiné au chauffage par induction à flux transverse d'un produit (1) plat ayant une face (1fs) supérieure et une face (1fi) inférieure, ledit inducteur comprenant des bobines (2as, 2ai, 2bs, 2bi) présentant des surfaces (S2as, S2ai, S2bs, S2bi) s'étendant sur des plans (P2as, P2ai, P2bs, P2bi) sensiblement parallèles entre eux, et une épaisseur (Eas, Eai, Ebs, Ebi) selon une direction perpendiculaire à ces plans, l'inducteur comprenant également un espace central (3) entre les bobines destiné à recevoir le produit (1), dans lequel au moins deux bobines (2as, 2ai) sont disposées d'un premier côté de l'espace central (3) et au moins deux bobines (2bs, 2bi) sont disposées d'un second côté de l'espace central (3) opposé au premier, dans lequel d'un même côté de l'espace central (3), la bobine (2ai, 2bi) la plus proche de la face (1fs, 1fi) du produit est distante de celle-ci d'une première distance (Dai, Dbi) et les autres bobines sont disposées à une distance de la face du produit au moins égale à la première distance (Dai, Dbi) augmentée de l'épaisseur (Eai, Ebi) des bobines disposées entre elles et la face du produit et en ce que les surfaces (P2as, P2ai, P2bs, P2bi) des bobines se recouvrent au moins partiellement, **caractérisé en ce que** la position relative des bobines est ajustable de sorte à modifier la distance des bobines à la face du produit qui leur est la plus proche.

2. Inducteur selon la revendication 1, les bobines (2as, 2ai, 2bs, 2bi) ayant un axe central (4as, 4ai, 4bs, 4bi) perpendiculaire aux surfaces (P2as, P2ai, P2bs, P2bi), **caractérisé en ce que** la position relative des bobines, les unes par rapport aux autres, est ajustable de sorte que les axes centraux (4as, 4ai, 4bs, 4bi) des bobines soient tous confondus, que les axes centraux des bobines soient tous distincts ou que certains soient confondus et d'autres soient distincts selon une direction parallèle auxdites surfaces (P2as, P2ai, P2bs, P2bi).

3. Inducteur selon la revendication 2, **caractérisé en ce que** la position relative des bobines, les unes par rapport aux autres, est ajustable selon la largeur du produit et/ou selon la longueur du produit.

4. Inducteur selon les revendications 1 ou 2, dans lequel la position relative des bobines, les unes par rapport aux autres, est ajustable de sorte de modifier la distance entre deux surfaces (P2as, P2ai, P2bs, P2bi) sensiblement parallèles sur lesquelles s'étendent les bobines.

5. Installation de chauffage par induction à flux transverse d'un produit (1) comprenant au moins un inducteur (20) selon l'une des revendications précédentes et au moins une source de puissance (10) reliée électriquement audit inducteur.

6. Installation de chauffage par induction à flux transverse d'un produit (1) selon la revendication précédente, comprenant un moyen (21) apte à modifier la distance d'une bobine à la face du produit qui lui est la plus proche.

7. Installation de chauffage par induction à flux transverse d'un produit (1) selon la revendication 5, comprenant un moyen (22, 23) apte à modifier la position relative d'une première bobine par rapport à une seconde bobine selon la largeur du produit et/ou selon la longueur du produit.

8. Installation de chauffage par induction à flux transverse d'un produit (1) selon la revendication 5, dans laquelle les bobines (2as, 2ai, 2bs, 2bi) d'un inducteur (20) disposées d'un côté de l'espace central (3) dudit inducteur sont alimentées par une première source de puissance (10) de l'au moins une source de puissance (10) et en ce que les bobines disposées de l'autre côté de l'espace central (3) sont alimentées par une seconde source de puissance (10) de l'au moins une source de puissance.

9. Installation de chauffage par induction à flux transverse d'un produit (1) selon la revendication 5, les bobines (2ai, 2bi) les plus proches de l'espace central étant alimentées par une première source de puissance (10) de l'au moins une source de puissance (10) et les bobines (2as, 2bs) les plus éloignées du produit sont alimentées par une seconde source de puissance (10) de l'au moins une source de puissance (10).

10. Installation de chauffage par induction à flux transverse d'un produit (1) selon l'une des revendications 5 à 9, comprenant au moins deux inducteurs (20) successifs selon la direction longitudinale du produit.

11. Procédé de chauffage par induction à flux transverse d'un produit (1) au moyen d'une installation selon l'une des revendications 5 à 10, **caractérisé en ce que** la position relative des bobines (2as, 2ai, 2bs, 2bi), les unes par rapport aux autres et par rapport au produit, d'un inducteur (20) est ajustée selon le profil de température du produit visé en sortie de l'inducteur.

## Patentansprüche

1. Induktor (20), der zum Querstrom-Induktionsheizen eines flachen Produkts (1) mit einer oberen Fläche (1fs) und einer unteren Fläche (1fi) bestimmt ist, wobei der Induktor Spulen (2as, 2ai, 2bs, 2bi) umfasst, die Oberflächen (S2as, S2ai, S2bs, S2bi) aufweisen, die sich auf Ebenen (P2as, P2ai, P2bs, P2bi) erstrecken, die im Wesentlichen parallel zueinander sind, und eine Dicke (Eas, Eai, Ebs, Ebi) in einer Richtung senkrecht zu diesen Ebenen, wobei der Induktor auch einen zentralen Raum (3) zwischen den Spulen umfasst, der zur Aufnahme des Produkts (1) bestimmt ist, wobei mindestens zwei Spulen (2as, 2ai) auf einer ersten Seite des zentralen Raums (3) angeordnet sind und mindestens zwei Spulen (2bs, 2bi) auf einer zweiten Seite des zentralen Raums (3) angeordnet sind, die der ersten gegenüberliegt, wobei auf derselben Seite des zentralen Raums (3) die Spule (2ai, 2bi), die der Fläche (1fs, 1fi) des Produkts am nächsten ist, von dieser um einen ersten Abstand (Dai, Dbi) entfernt ist und die anderen Spulen in einem Abstand von der Fläche des Produkts angeordnet sind, der mindestens gleich dem ersten Abstand (Dai, Dbi) zuzüglich der Dicke (Eai, Ebi) der zwischen ihnen und der Fläche des Produkts angeordneten Spulen ist, und wobei sich die Oberflächen (P2as, P2ai, P2bs, P2bi) der Spulen mindestens teilweise überdecken, **dadurch gekennzeichnet, dass** die relative Position der Spulen einstellbar ist, um den Abstand der Spulen zu der ihnen am nächsten liegenden Fläche des Produkts zu modifizieren.

2. Induktor nach Anspruch 1, wobei die Spulen (2as, 2ai, 2bs, 2bi) eine Mittelachse (4as, 4ai, 4bs, 4bi) senkrecht zu den Oberflächen (P2as, P2ai, P2bs, P2bi) aufweisen, **dadurch gekennzeichnet, dass** die relative Position der Spulen zueinander einstellbar ist, sodass alle Mittelachsen (4as, 4ai, 4bs, 4bi) der Spulen zusammenfallen, dass alle Mittelachsen der Spulen verschieden sind oder dass einige zusammenfallen und andere in einer Richtung parallel zu den Oberflächen (P2as, P2ai, P2bs, P2bi) verschieden sind.

3. Induktor nach Anspruch 2, **dadurch gekennzeichnet, dass** die relative Position der Spulen zueinander entlang der Breite des Produkts und/oder entlang der Länge des Produkts einstellbar ist.

4. Induktor nach Anspruch 1 oder 2, wobei die relative Position der Spulen zueinander einstellbar ist, um den Abstand zwischen zwei im Wesentlichen parallelen Oberflächen (P2as, P2ai, P2bs, P2bi), auf denen sich die Spulen erstrecken, zu modifizieren.

5. Querstrom-Induktionsheizanlage für ein Produkt (1), umfassend mindestens einen Induktor (20) nach einem der vorstehenden Ansprüche und mindestens eine Leistungsquelle (10), die mit dem Induktor elektrisch verbunden ist.

6. Querstrom-Induktionsheizanlage für ein Produkt (1) nach dem vorstehenden Anspruch, umfassend ein Mittel (21), das dazu geeignet ist, den Abstand einer Spule zu der ihr am nächsten liegenden Fläche des Produkts zu modifizieren.

7. Querstrom-Induktionsheizanlage für ein Produkt (1) nach Anspruch 5, umfassend ein Mittel (22, 23), das dazu geeignet ist, die relative Position einer ersten Spule in Bezug auf eine zweite Spule entlang der Breite des Produkts und/oder entlang der Länge des Produkts zu modifizieren.

8. Querstrom-Induktionsheizanlage für ein Produkt (1) nach Anspruch 5, wobei die Spulen (2as, 2ai, 2bs, 2bi) eines Induktors (20), die auf einer Seite des zentralen Raums (3) des Induktors angeordnet sind, von einer ersten Leistungsquelle (10) der mindestens einen Leistungsquelle (10) gespeist werden und wobei die auf der anderen Seite des zentralen Raums (3) angeordneten Spulen von einer zweiten Leistungsquelle (10) der mindestens einen Leistungsquelle gespeist werden.

9. Querstrom-Induktionsheizanlage für ein Produkt (1) nach Anspruch 5, wobei die dem zentralen Raum am nächsten liegenden Spulen (2ai, 2bi) von einer ersten Leistungsquelle (10) der mindestens einen Leistungsquelle (10) gespeist werden und die vom Produkt am weitesten entfernten Spulen (2as, 2bs) von einer zweiten Leistungsquelle (10) der mindestens einen Leistungsquelle (10) gespeist werden.

10. Querstrom-Induktionsheizanlage für ein Produkt (1) nach einem der Ansprüche 5 bis 9, umfassend mindestens zwei in Längsrichtung des Produkts aufeinanderfolgende Induktoren (20).

11. Querstrom-Induktionsheizverfahren für ein Produkt (1) mittels einer Anlage nach einem der Ansprüche 5 bis 10, **dadurch gekennzeichnet, dass** die relative Position der Spulen (2as, 2ai, 2bs, 2bi) zueinander und in Bezug auf das Produkt eines Induktors (20) entsprechend dem angestrebten Temperaturprofil des Produkts am Ausgang des Induktors eingestellt wird.

## Claims

1. Inductor (20) intended for heating a flat product (1) by transverse flux induction, the flat product having an upper face (1fs) and a lower face (1fi), said inductor comprising coils (2as, 2ai, 2bs, 2bi) that have surfaces (S2as, S2ai, S2bs, S2bi) extending over planes (P2as, P2ai, P2bs, P2bi) substantially parallel to one another, and a thickness (Eas, Eai, Ebs, Ebi) in a direction perpendicular to these planes, the inductor also comprising a central space (3) between the coils that is intended to receive the product (1), wherein at least two coils (2as, 2ai) are arranged on a first side of the central space (3) and at least two coils (2bs, 2bi) are arranged on a second side of the central space (3) opposite the first side, wherein on the same side of the central space (3), the coil (2ai, 2bi) closest to the face (1fs, 1fi) of the product is spaced therefrom by a first distance (Dai, Dbi) and the other coils are arranged at a distance from the face of the product that is at least equal to the first distance (Dai, Dbi) plus the thickness (Eai, Ebi) of the coils arranged between them and the face of the product, and the surfaces (P2as, P2ai, P2bs, P2bi) of the coils at least partially overlap, **characterized in that** the relative position of the coils is adjustable so as to modify the distance of the coils from the face of the product that is closest to them.

2. Inductor according to claim 1, the coils (2as, 2ai, 2bs, 2bi) having a central axis (4as, 4ai, 4bs, 4bi) perpendicular to the surfaces (P2as, P2ai, P2bs, P2bi), **characterized in that** the relative position of the coils with respect to one another is adjustable such that the central axes (4as, 4ai, 4bs, 4bi) of the coils are all coincident, the central axes of the coils are all separate or some are coincident and others are separate in a direction parallel to said surfaces (P2as, P2ai, P2bs, P2bi).

3. Inductor according to claim 2, **characterized in that** the relative position of the coils with respect to one another is adjustable according to the width of the product and/or according to the length of the product.

4. Inductor according to claims 1 or 2, wherein the relative position of the coils with respect to one another is adjustable so as to modify the distance between two substantially parallel surfaces (P2as, P2ai, P2bs, P2bi) over which the coils extend.

5. Installation for heating a product (1) by transverse flux induction, comprising at least one inductor (20) according to one of the preceding claims and at least one power source (10) electrically connected to said inductor.

6. Installation for heating a product (1) by transverse flux induction according to the preceding claim, comprising a means (21) able to modify the distance of a coil from the face of the product that is closest to it.

7. Installation for heating a product (1) by transverse flux induction according to claim 5, comprising a means (22, 23) able to modify the relative position of a first coil with respect to a second coil according to the width of the product and/or according to the length of the product.

8. Installation for heating a product (1) by transverse flux induction according to claim 5, wherein the coils (2as, 2ai, 2bs, 2bi) of an inductor (20) that are arranged on one side of the central space (3) of said inductor are supplied by a first power source (10) of the at least one power source (10) and the coils arranged on the other side of the central space (3) are supplied by a second power source (10) of the at least one power source.

9. Installation for heating a product (1) by transverse flux induction according to claim 5, the coils (2ai, 2bi) closest to the central space being supplied by a first power source (10) of the at least one power source (10) and the coils (2as, 2bs) furthest from the product being supplied by a second power source (10) of the at least one power source (10).

10. Installation for heating a product (1) by transverse flux induction according to one of claims 5 to 9, comprising at least two consecutive inductors (20) in the longitudinal direction of the product.

11. Method for heating a product (1) by transverse flux induction by means of an installation according to one of claims 5 to 10, **characterized in that** the relative position of the coils (2as, 2ai, 2bs, 2bi) of an inductor (20) with respect to one another and with respect to the product is adjusted according to the temperature profile of the product desired at the inductor outlet.
